Europäisches Patentamt

(19) European Patent Office

Office européen des brevets

(11) Publication number: **0 074 785**
**A2**

## (12) EUROPEAN PATENT APPLICATION

(21) Application number: **82304695.8**

(22) Date of filing: **08.09.82**

(51) Int. Cl.³: **F 16 F 15/08**
**F 16 M 7/00, B 60 H 1/00**
**F 04 D 29/60**

(30) Priority: **14.09.81 US 301630**

(43) Date of publication of application:
**23.03.83 Bulletin 83/12**

(84) Designated Contracting States:
**BE DE FR GB NL SE**

(71) Applicant: **HONEYWELL INC.**
**Honeywell Plaza**
**Minneapolis Minnesota 55408(US)**

(72) Inventor: **Krafthefer, Brian C.**
**3724-16th Avenue South**
**Minneapolis Minnesota 55407(US)**

(72) Inventor: **Strand, Rolf L.**
**1723-6th Street**
**White Bear Lake Minnesota 55110(US)**

(74) Representative: **Riddle, John et al,**
**Honeywell Control Systems Ltd. Patent Department**
**Charles Square**
**Bracknell, Berks.(GB)**

(54) **Motor mounting.**

(57) The motor mounting includes a motor support plate (8) attached to the motor in a plane generally at right angles to the motor drive shaft (4), a motor support frame (27) and mounting devices (10, 12, 14, 16) mounting the support plate on the support frame. Each device is provided by a unitary member having two legs (18, 19) each terminating at its free end in a respective one of two ears (12, 25) extending generally at right angles to the main portion of its respective leg, one (24) of the ears of each device being secured to the motor support plate and the other (25) of the ears being resiliently mounted on the motor support frame.

FIG.2

EP 0 074 785 A2

## MOTOR MOUNTING

The present invention relates to motor mountings.

Motor driven fans used in many ventiling and air conditioning devices often include a direct driven fan mounted on a motor shaft, a motor supporting frame and a panel or fan housing to which the frame is fastened. The panel and frame conventionally have an opening to accommodate the fan with the apparatus being mounted in an opening of an enclosure served by the apparatus, e.g., air conditioner, electrostatic precipitator, etc. While such a fan apparatus often involves attempts to secure a balance of the rotating parts, e.g., the fan and motor armature, those ventiling devices are frequently noisy in operation due mainly to vibration and oscillatory effects in the motor, fan, support frame and panel occasioned by the rapidly rotating and oscillatory parts. Conventional efforts to obviate this vibration problem have included a spring suspension of the fan motor on the motor supporting frame which have inherent limitations inasmuch as the springs must also maintain the motor and fan in a correct running position which substantially minimizing their vibration and noise absorbing capacity. Further, such supports are often of a substantial size which increases the space requirements for the motor support assembly. Accordingly, it would be desirable to provide a motor support having vibration isolating capabilities while maintaining a minimal size to minimize the space requirements within the motor support frame.

An aim of the present invention is to provide a motor mounting having improved vibration isolating capabilities.

According to the present invention, there is provided a motor mounting comprising a motor support plate attached to the motor in a plane generally at right angles to the motor drive shaft, a motor support frame, and mounting devices for mounting the support plate on the support frame, characterized in that each mounting device is provided by a unitary member having two legs each terminating at its free end in a respective one of two ears extending generally at right angles to the main portion of its respective leg, in that one of the ears of each device is secured to the motor support plate and in that the other of the ears is resiliently mounted on the motor support frame.

An embodiment of the invention will now be described, by way of example, with reference to the accompanying drawings, in which:

Figure 1 is a side view of a motor mounting embodying the present invention;

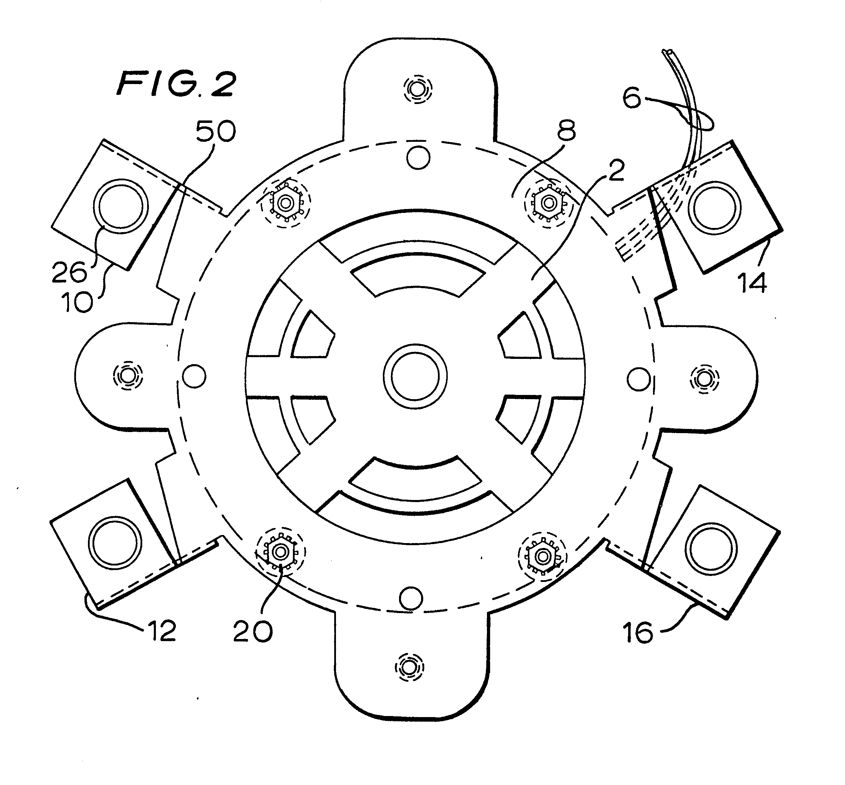

Figure 2 is an end view of the motor and motor mounting shown in Figure 1,

Figure 3 is a cross-section of the attachment of one leg of the motor mounting shown in Figures 1 and 2 to a support frame, and

Figure 4 is an isometric view of one of the motor mountings shown in Figures 1 and 2.

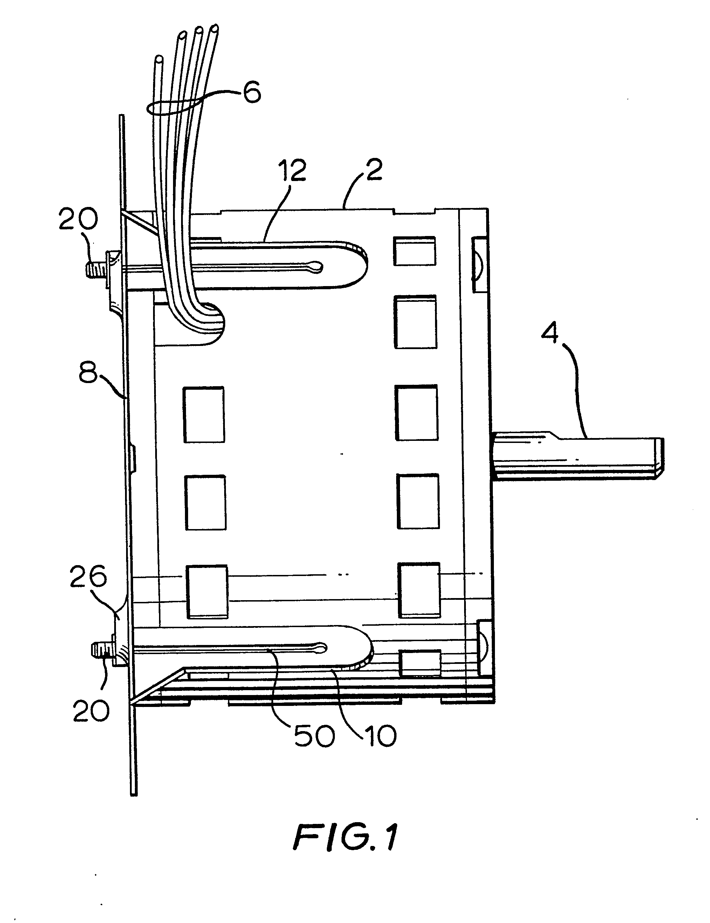

Referring to Figure 1 in more detail, there is shown a side view of a motor mounting supporting an electrical motor 2 having a motor drive shaft 4 which may be connected to a motor drive apparatus by any suitable means (not shown). The motor 2 is connected by electrical wires 6 to a conventional means for energizing the electrical motor 2. A motor support plate 18 is mounted on one end of the motor 2 generally perpendicular to the rotational axis of the motor drive shaft 4 and from which extends a plurality of mounting devices 10, 12, 14 and 16. The motor support plate 18 is connected to the motor 2 by a plurality of machine screws each extending longitudinally from the motor 2 through the support plate 8 and fastened to the support plate 8 by a respective one of a plurality of nuts 20.

Each of the mounting devices 10, 12, 14 and 16 is of a two-legged shape and one of the legs 18 is attached to the periphery of the support plate 8 either by welding or other conventional securing means or by being integrally formed therewith by a suitable metal stamping process with a subsequent forming of the legs 10, 12, 14 and 16. In each case, the end of the attached leg 18 of each of device 10, 12, 14 and 16 is provided by an ear 24 extending at right angles from the main portion of the leg. The ear 24 is utilized to position the corresponding leg of the respective motor mounting at substantially a right angle with respect to the plane of the support plate 8. The other end of each of the leg 19 of mounting devices 10, 12, 14 and 16 is terminated in a ear 25, extending at right angles to the main portion of the leg; ear 25 having a hole 26 therein to permit attachment of the mounting devices of support plate 8. The main leg portions are generally parallel and separated by elongate slot 50. In use, the main leg portions of the mounting devices 10, 12, 14 and 16 extend from the support plate 8 generally parallel to the rotational axis of the motor 2, and the mounting devices 10, 12, 14 and 16 allow any angular vibration of the motor 2 to be isolated from a support frame.

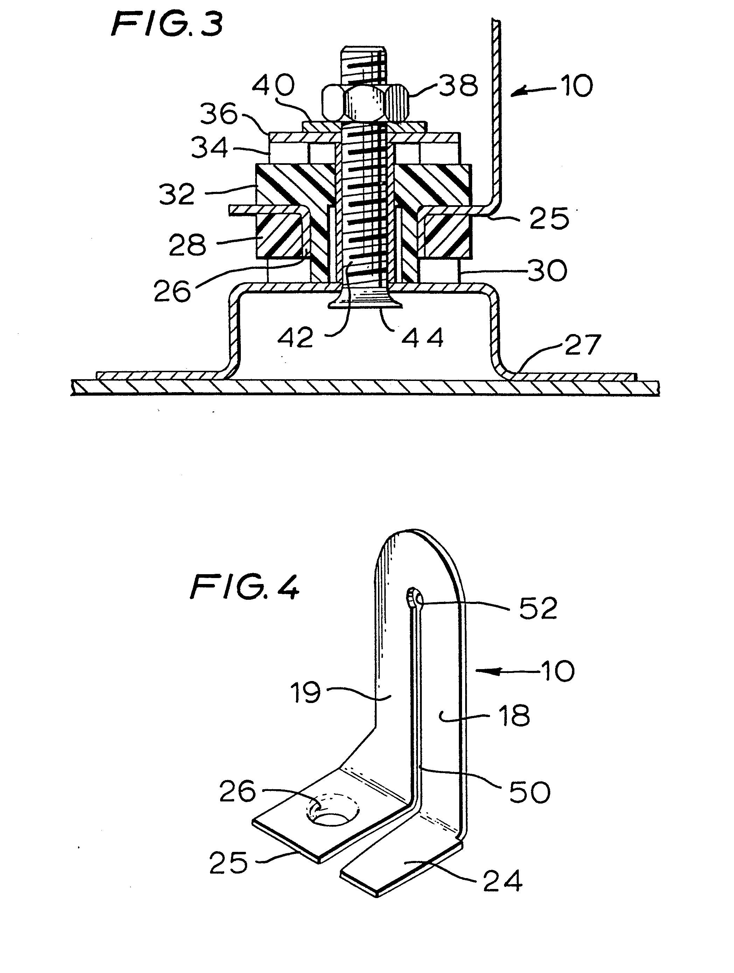

In Figure 3, there is shown a cross-sectional view of the ear 25 on the mounting device 10 as attached to a support frame 27. The support frame 27 is arranged as a hollow box section which is separated from the ear 25 by a layered arrangement of a resilient ring 28 in contact with the ear 25 and a first spacing washer 30 between the resilient ring 28 and the mounting frame 27. A resilient bushing 32 is positioned in contact with the other side of the ear 25 from the ring 28 and includes a coaxial cylindrical extension extending through the hole 26 in the ear 25 to the mounting frame 27. A second spacing washer 34 is positioned on top of the resilient bushing 32 and is in contact with a thrust washer 36. A nut 38 and lock washer 40 are located on the other side of the thrust washer 36 from the spacing ring 34 and are mounted on the threaded end of a floating pin 42. The pin 42 has a head 44 at one end thereof located within the hollow frame 27 and overlying the hole 26 whereby the pin 42 serves as a guide for the rubber bushing 32 and thrust washer 36. Thus, the resilient bushing 32 and the resilient ring 28 are effective to resiliently mount the device on the support frame, the pin 42 allowing a degree of movement of the ear 25 and the bushing 32 to provide vibration isolation. The ring 28 and 32 may be made of any suitable resilient material, e.g., rubber.

Referring to Figure 4, for a more detailed description of the mounting device, the legs 18, 19 of the device as mentioned previously are separated by elongate slot 50 and this slot terminates at its closed end in an enlarged hole 52. The ears 24 and 25 may be either substantially coplanar or non-coplanar to afford a desired mounting of the motor 2 on the plate 8 and the support frame 27. The device may be made of any suitable material having a suitable resiliency and strength, e.g., spring type steel having a thickness of approximately 1 mm.

CLAIMS

1.  A motor mounting comprising a motor support plate attached to the motor in a plane generally at right angles to the motor drive shaft, a motor support frame, and mounting devices for mounting the support plate on the support frame, characterized in that each mounting device (10, 12, 14, 16) is provided by a unitary member having two legs (18, 19) each terminating at its free end in a respective one of two ears (24, 25) extending generally at right angles to the main portion of its respective leg, in that one of the ears (24) of each device is secured to the motor support plate, and in that the other of the ears (25) is resiliently mounted on the motor support frame by means (26 to 44).

2.  The motor mounting of Claim 1, characterized in that the other ear (25) has a hole therein and in that a resilient bushing (32) is located in the hole to isolate the ear from the support frame (27).

3.  The motor mounting of Claim 1 or 2, characterized in that the ears are substantially caplanar.

FIG.1

FIG.2

50

8

6

2

26
10

14

12

20

16

2/3

0074785

*FIG.3*

40 38 10
36
34
32
28
26
25
30

42 44 27

*FIG.4*

52
19 10
18
26 50
25 24